# EUROPÄISCHE PATENTSCHRIFT

(11) **EP 0 745 034 B1**
(45) Veröffentlichungstag und Bekanntmachung des Hinweises auf die Patenterteilung: **02.06.1999**
(21) Anmeldenummer: 95941096.0
(22) Anmeldetag: 13.12.1995
(51) Int. Cl.: B60H 1/00

(54) **HEIZUNGS- ODER KLIMAANLAGE FÜR EIN KRAFTFAHRZEUG**
HEATING OR AIR CONDITIONING INSTALLATION FOR MOTOR VEHICLES
INSTALLATION DE CHAUFFAGE OU DE CLIMATISATION POUR VEHICULES A MOTEUR

(30) Priorität: 20.12.1994 DE 4445380
(43) Veröffentlichungstag der Anmeldung: 04.12.1996
(73) Patentinhaber: ROBERT BOSCH GMBH, 70442 Stuttgart (DE); Behr GmbH & Co., 70469 Stuttgart (DE)
(72) Erfinder: FRANKENHAUSER, Bruno, D-73035 Göppingen (DE); GRÖSCH, Lothar, D-70374 Stuttgart (DE); JAUERNIG, Peter, D-75233 Tiefenbronn (DE); PETER, Cornelius, D-77815 Bühl (DE); BENDELL, Ian, D-71297 Mönsheim (DE); FÖRSTER, Michael, D-70806 Kornwestheim (DE)
(74) Vertreter: Weller, Erich W.
(86) Internationale Anmeldenummer: EP9504915
(87) Internationale Veröffentlichungsnummer: WO9619359

(56) Entgegenhaltungen:
- DE-A- 2 061 932
- DE-A- 3 039 148
- DE-A- 3 040 815
- FR-A- 2 703 630
- PATENT ABSTRACTS OF JAPAN vol. 11 no. 360 (M-645) & JP,A,62 137219 (NISSAN MOTOR CO LTD)

## Beschreibung

Die Erfindung bezieht sich auf eine Heizungs- oder Klimaanlage für ein Kraftfahrzeug, die einen Lufteintrittsteil, einen Luftaustrittsteil und einen zwischen dem Lufteintrittsteil und dem Luftaustrittsteil angeordneten, mindestens ein Bauteil mit Lufttemperierfunktion enthaltenden Mittelteil beinhaltet. Derartige Anlagen sind bekannt, wobei unter Heizungsanlagen solche verstanden werden, bei denen der Mittelteil zur Lufttemperierung lediglich ein Heizelement, z.B. einen von heißem Wasser durchströmbaren Wärmeübertrager, beinhaltet. Bei Klimaanlagen befindet sich in den Mittelteil zusätzlich ein Verdampfer im Luftströmungsweg stromaufwärts vom Heizelement.

Eine Klimaanlage dieser Art ist in der Offenlegungsschrift DE 30 39 148 A1 offenbart. Bei dieser Klimaanlage sind der ein Luftansauggebläse enthaltende Lufteintrittsteil, der einen Verdampfer und ein strömungsabwärts davon angeordnetes Heizelement aufweisende Mittelteil und der mit verschiedenen Luftaustrittsöffnungen samt zugeordneten Luftklappen ausgestattete Luftaustrittsteil axial hintereinanderliegend angeordnet. Die Klimaanlage besteht aus drei fest aneinander fixierten, luftführenden Gehäuseabschnitten, wobei der vordere Gehäuseabschnitt dem Lufteintrittsteil mit dem Luftansauggebläse zugeordnet ist, der mittlere Gehäuseabschnitt den Verdampfer bebeherbergt und der hintere Gehäuseabschnitt dem hinteren, das Heizelement enthaltenden Abschnitt des Mittelteils und dem Luftaustrittsteil gemeinsam ist.

Heizungs- oder Klimaanlagen von Kraftfahrzeugen sind meist im Cockpitbereich angeordnet, wo der zur Verfügung stehende Einbauraum meist sehr begrenzt ist, so daß Bedarf an Anlagen besteht, die auch in vergleichsweise kleine Einbauräume unter Aufrechterhaltung einer ausreichenden Zugänglichkeit für Demontagezwecke, z.B. im Reparaturfall, montierbar sind. Eine weitere, sich häufig an Heizungs- oder Klimaanlagen für Kraftfahrzeuge stellende Anforderung besteht darin, auf möglichst einfache Weise verschiedene, konstruktiv ähnlich gebaute Fahrzeugtypen mit unterschiedlichen Heizungs- oder Klimaanlagenvarianten ausrüsten zu können.

Aus der Offenlegungsschrift FR 2 703 630 ist eine Heizungs- oder oder Klimaanlage für ein Kraftfahrzeug bekannt, bei welcher hintereinander in Fahrzeuglängsrichtung Gehäuseeinheiten für eine Lufteinlaßeinheit, eine Heizeinheit, eine Ventilationseinheit und eine Kühleinheit vorgesehen sind. Die Heizeinheit und die Ventilationseinheit beinhalten dabei je ein eigenes Gebläse, wobei diese Gebläse mit ihren Längsachsen parallel zur Fahrzeuglängsrichtung hintereinanderliegend oder auch parallel versetzt angeordnet sein können.

Der Erfindung liegt daher als technisches Problem die Bereitstellung einer Heizungs- oder Klimaanlage für ein Kraftfahrzeug zugrunde, die mit vergleichsweise geringem Aufwand montierbar und zwecks Reparatur oder recyclinggerechter Entsorgung demontierbar ist und relativ einfach in unterschiedlichen Varianten in entsprechende Fahrzeuge eingebaut werden kann.

Dieses Problem wird durch eine Heizungs- oder Klimaanlage mit den Merkmalen des Anspruchs 1 gelöst. Die Anlage besitzt einen modularen Aufbau, bei dem von den drei Teilen, nämlich Lufteintrittsteil, Luftaustrittsteil und zwischenliegender Mittelteil, wenigstens ein Teil über eine Trennstelle abnehmbar an einem angrenzenden Teil angeordnet ist. Der Mittelteil beinhaltet sowohl einen Verdampfer als auch ein strömungsabwärts von diesem angeordnetes Heizelement, wobei der Mittelteil aus zwei über eine weitere Trennstelle lösbar miteinander verbundenen Moduleinheiten besteht, von denen die eine den Verdampfer und die andere das Heizelement enthält. Auf diese Weise können mit wenig Aufwand durch Verwenden verschiedener Verdampfer-Moduleinheiten und/oder Heizelement-Moduleinheiten ja nach Bedarf unterschiedliche Klimaanlagenvarianten realisiert werden, wobei der Lufteintrittsteil und der Luftaustrittsteil ebenfalls anwendungsabhängig unverändert bleiben oder in verschiedenen Varianten zum Einsatz kommen können.

Dieser Aufbau der Anlage erlaubt sowohl eine rationelle Vormontage der einzelnen Moduleinheiten bei einem entsprechenden Fahrzeugteilezulieferer als auch eine einfache Endmontage der Heizungs- oder Klimaanlage in das Kraftfahrzeug. Die Möglichkeit, einzelne Moduleinheiten der Anlage getrennt zuliefern zu können, vereinfacht außerdem die Logistik. Als weiteren Vorteil ermöglicht der modulare Aufbau mit geringem Aufwand die Realisierung unterschiedlicher Varianten der Heizungs- bzw. Klimaanlage sowie eine einfache Demontage, die sowohl im Reparaturfall als auch nach Stillsetzen des Fahrzeugs im Hinblick auf eine mögliche Recyclingfähigkeit der verschiedenen Bauteile von Bedeutung ist.

In einer Weiterbildung der Erfindung nach Anspruch 2 liegen die an der einen oder den mehreren Trennstellen voneinander abnehmbaren Moduleinheiten der Heizungs- und Klimaanlage im wesentlichen in einer Axiallinie hintereinander, und die solchermaßen aufgebaute Heizungs- und Klimaanlage kann mit dieser Axiallinie im wesentlichen parallel zur Fahrzeuglängsrichtung eingebaut werden. Zur Unterbringung dieser Heizungs- oder Klimaanlage genügt folglich bereits ein verhältnismäßig kleinflächiger Stirnwanddurchbruch am Fahrzeug.

Eine nach Anspruch 4 weitergebildete Klimaanlage ist in hohem Maße dadurch modular aufgebaut, daß zusätzlich zu den beiden Mittelteil-Moduleinheiten, die den Verdampfer bzw. das Heizelement enthalten, der Lufteintrittsteil und der Luftaustrittsteil als Moduleinheiten gestaltet sind, die über entsprechende Trennstellen lösbar mit der den Verdampfer enthaltenden bzw. mit der das Heizelement enthaltenden Moduleinheit des Mittelteiles verbunden sind. Jede Moduleinheit kann separat demontiert und ausgetauscht bzw. entsorgt werden.

Bevorzugte Ausführungsformen der Erfindung sind in den Zeichnungen dargestellt und werden nachfolgend beschrieben. Hierbei zeigen:
- Fig. 1: eine schematische, perspektivische Explosionsansicht eines ersten Beispiels einer modular aufgebauten Klimaanlage für ein Kraftfahrzeug,
- Fig. 2: eine perspektivische Explosionsansicht einer modular aufgebauten, wasserseitig geregelten Klimaanlage für ein Kraftfahrzeug,
- Fig. 3: eine Längsschnittansicht der Klimaanlage von Fig. 2 und
- Fig. 4: eine Längsschnittansicht einer modular aufgebauten, luftseitig geregelten Klimaanlage für ein Kraftfahrzeug.

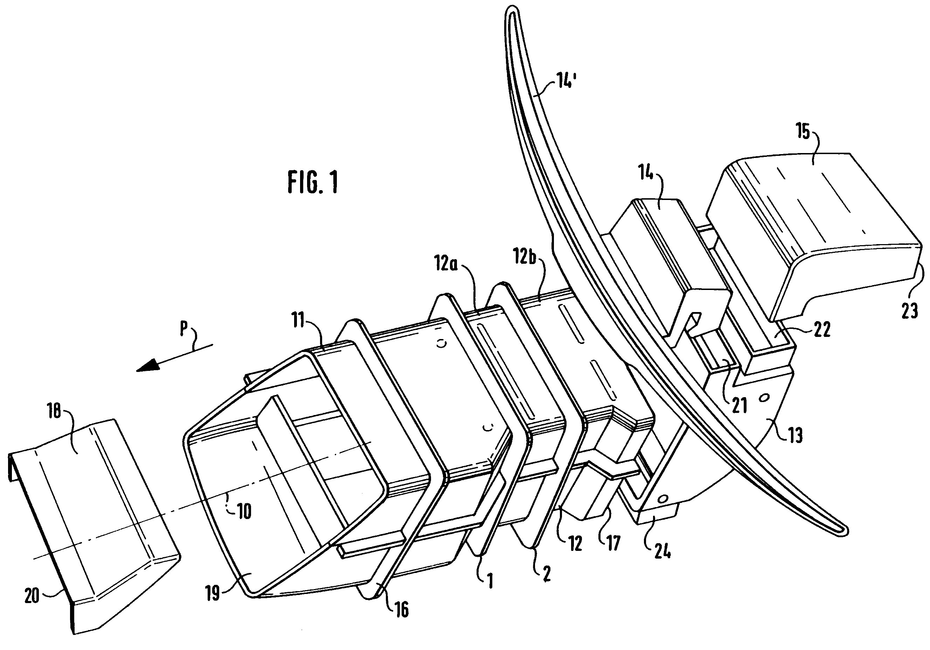

Die Fig. 1 zeigt schematisch eine erste modular aufgebaute Kraftfahrzeug-Klimaanlage mit einem Lufteintrittsteil (11), einem Luftaustrittsteil (13) und einem zwischenliegenden Mittelteil (12), wobei die drei Teile längs einer Axiallinie (10) hintereinander angeordnet sind, die bei in das Fahrzeug eingebauter Klimaanlage parallel zur Fahrzeuglängsrichtung verläuft. Die Fahrzeuglängsrichtung ist durch einen Pfeil (P) symbolisiert, dessen Richtung bezüglich des Fahrzeugs nach vorne weist. Der Lufteintrittsteil (11) ist als eine separate Moduleinheit gestaltet, die über eine zugehörige Trennstelle (1) lösbar mit dem strömungsaufwärts gelegenen Stirnende des Mittelteiles (12) verbunden ist. Ebenso bildet das Luftaustrittsteil (13) eine eigenständige Moduleinheit, die über eine zugehörige Trennstelle (17) mit dem strömungsabwärts gelegenen Stirnende des Mittelteiles (12) lösbar verbunden ist. An den Luftaustrittsteil (13) sind luftaustrittsseitig ein Ausströmkanal (15) sowie eine sich quer hinter der Unterkante einer Windschutzscheibe des Fahrzeugs erstreckende, langgestreckte Scheibenbelüftung (14) angeschlossen.

Der Mittelteil (12) selbst ist aus zwei hintereinander liegenden Moduleinheiten (12a, 12b) aufgebaut, die über eine weitere Trennstelle (2) lösbar aneinandergefügt sind. In nicht näher gezeigter Weise ist in der strömungsaufwärts gelegenen Mittelteil-Moduleinheit (12a) ein Verdampfer und in der strömungsabwärts gelegenen Mittelteil-Moduleinheit (12b) ein Heizelement der Klimaanlage untergebracht. Die einzelnen Moduleinheiten (11, 12a, 12b, 13) besitzen ein kastenförmiges Gehäuse aus Kunststoff und sind an den Trennstellen (1, 2, 17) durch Clips- oder Klammerverbindungen aneinandergefügt. Zur Stabilisierung der Verbindungen können zusätzliche Verbindungselemente vorgesehen sein, beispielsweise in Form von Paßstiften. Die Gehäuse des Lufteintrittsteils (11) und der Mittelteil-Moduleinheiten (12a, 12b) bestehen jeweils zweckmäßigerweise aus zwei Hälften mit waagrecht verlaufender Teilungsebene. Die Verbindung der jeweiligen beiden Gehäusehälften dieser Moduleinheiten (11, 12a, 12b) kann dabei ebenfalls mittels Clips- oder Klammerverbindungen erfolgen. Der Lufteintrittsteil (11) beinhaltet eine frontseitige Abdeckung (18), die eine schräg angeschnittene Öffnung (19) bis auf einen Lufteinlaß (20) abdeckt. Im Lufteintrittsteil (11) sind in nicht näher gezeigter Weise wenigstens ein Filterelement und ein Luftansauggebläse untergebracht, wobei die Abdeckung (18) zwecks Filterwechsel oder Gebläsereparatur abgenommen werden kann.

Der Luftaustrittsteil (13) besitzt eine erste Auslaßöffnung (21), auf welcher die langgestreckte Scheibenbelüftung (14) mit ihrer schlitzförmigen Scheibendüse (14') aufsitzt, sowie eine zweite Auslaßoffnung (22), auf welcher der Ausströmkanal (15) aufsitzt. Cockpitseitig schließt der Ausströmkanal (15) mit Ausströmdüsen (23) ab. Den beiden Auslaßöffnungen (21, 22) gegenüberliegend ist eine weitere Auslaßöffnung (24) vorgesehen, welche die Luft in den Fußraum des Cockpits leitet. Innerhalb des Luftaustrittsteils (13) sind nicht dargestellte Umlenkklappen bzw. Ventile angeordnet, die von außen über an sich bekannte Stelleinrichtungen einstellbar sind. Mit Hilfe dieser Umlenkklappen wird die in den Luftaustrittsteil (13) einströmende Luft an die gewünschte Stelle geleitet.

Insgesamt besteht die Klimaanlage von Fig. 1 folglich aus vier in Fahrzeuglängsrichtung hintereinander liegenden Moduleinheiten, die zwecks Austausch oder Entsorgung getrennt voneinander demontierbar sind. Je nach verwendetem Typ einer jeweiligen Moduleinheit lassen sich auf diese Weise eine Vielzahl von Klimaanlagenvarianten mit im wesentlichen gleicher Bauform realisieren. Dabei können nicht nur verschiedene Typen von Lufteintrittsteilen (11) und Luftaustrittsteilen (13) Verwendung finden, sondern auch unterschiedliche MittelteilModuleinheiten (12a, 12b) mit unterschiedlichen Verdampfer- oder Heizelementtypen. Es versteht sich, daß bei Bedarf auch nur eine oder zwei der gezeigten Trennstellen (1, 2, 17) vorgesehen sein können, so daß beispielsweise der Mittelteil (12) eine zusammenhängende Moduleinheit bildet, ggf. auch zusammen mit entweder dem Lufteintrittsteil (11) oder dem Luftaustrittsteil (13), oder es kann die vordere Mittelteil-Moduleinheit (12a) gemeinsam mit dem Lufteintrittsteil (11) oder die hintere Mittelteil-Moduleinheit (12b) gemeinsam mit dem Luftaustrittsteil (13) eine einzige Moduleinheit bilden. Umfangsseitig umlaufend ist am Gehäuse des Lufteintrittsteils (11) ein Flansch (16) vorgesehen, der beim Einbau der Klimaanlage gegen den Rand der zur Durchführung der Klimaanlage durch eine Stirnwand des Kraftfahrzeugs vorgesehene Stirnwandöffnung anliegt.

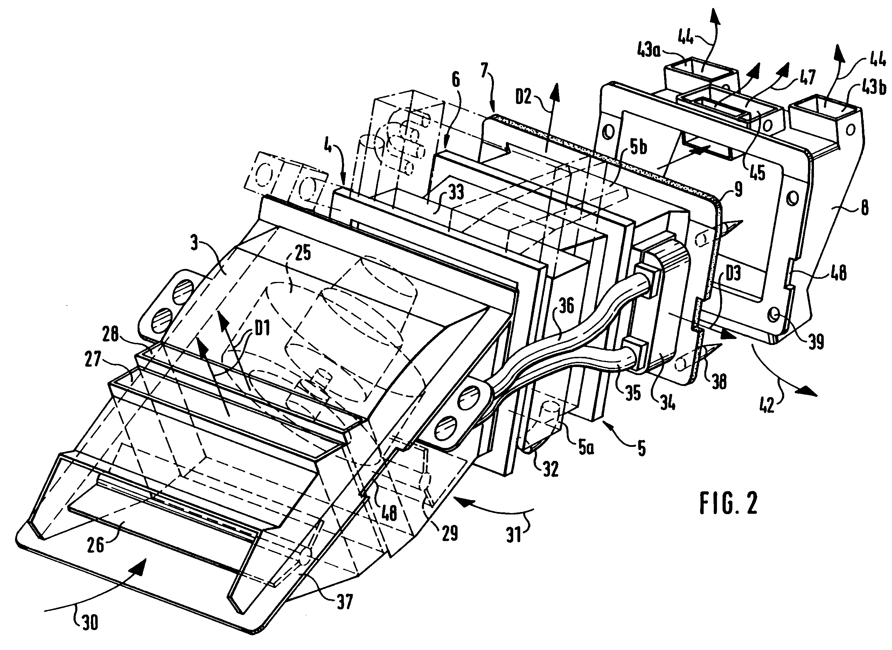

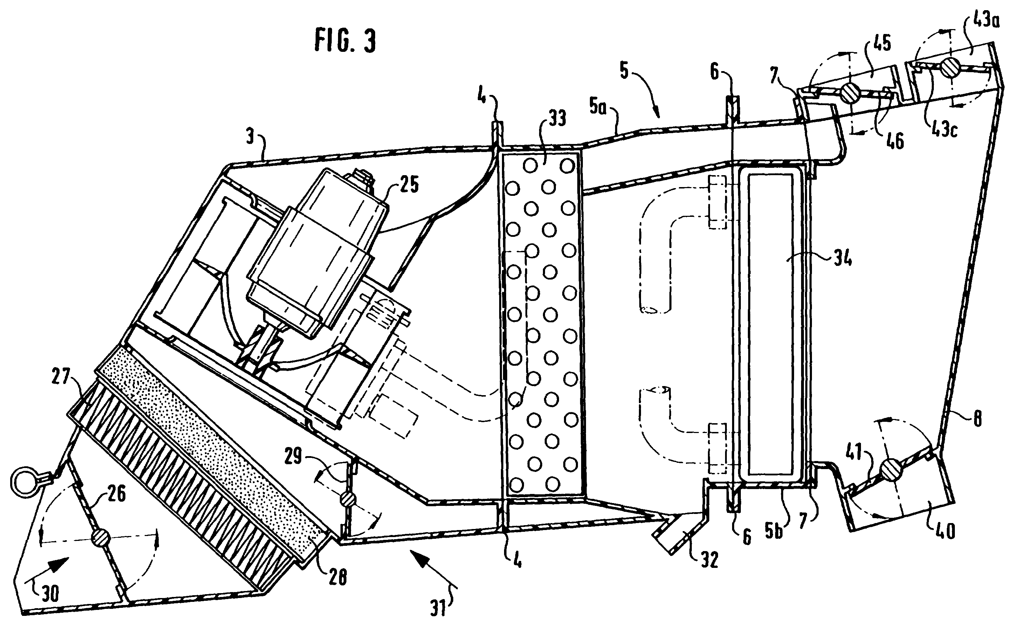

In den Fig. 2 und 3 ist ein weiteres Beispiel einer Kraftfahrzeug-Klimaanlage genauer dargestellt, die in ihrem Aufbau demjenigen der Klimaanlage von Fig. 1 ähnelt und nach dem Prinzip der wasserseitigen Regelung arbeitet, d.h. die Temperatur der ausströmenden Luft wird über den Heißwasserdurchsatz geregelt. Auch diese Klimaanlage beinhaltet in einer im eingebauten Zustand parallel zur Fahrzeuglängsachse liegenden Axiallinie hintereinanderliegend einen Lufteintrittsteil (3), einen Luftaustrittsteil (8) und einen dazwischen liegenden Mittelteil (5). Der Mittelteil (5) besteht wiederum aus zwei Moduleinheiten (5a, 5b), die über eine Trennstelle (6) lösbar aneinander befestigt sind und von denen die strömungsaufwärts gelegene (5a) einen Verdampfer (33) und die strömungsabwärts gelegene (5b) einen als Heizelement fungierenden Wärmeübertrager (34) beinhalten. Der Wärmeübertrager (34) wird in üblicher Weise über ein Rohrleitungssystem, das eine Vorlaufleitung (35) und eine Rücklaufleitung (36) beinhaltet, von heißem Wasser durchströmt, dessen Durchsatz zur Regelung der Heizleistung mittels nicht dargestellter Ventile geregelt werden kann. An der Verdampferrückseite ist ebenfalls in üblicher Weise ein Kondensatwasserablauf (32) angeordnet.

Der Lufteintrittsteil (3) bildet eine Moduleinheit, die über eine Trennstelle (4) lösbar am vorderen Stirnende der den Verdampfer (33) enthaltenden Mittelteil-Moduleinheit (5a) angebracht ist. Er enthält ein Luftansauggebläse (25), das in einem schräg verlaufenden Abschnitt des Lufteintrittsteils (3) mit schräg verlaufender Lüfterachse angeordnet ist. Zu seiner Befestigung sind an der Gehäuseinnenseite des Lufteintrittsteils (3) geeignete Befestigungsflächen vorgesehen. Das Gebläse (25) umfaßt einen Elektromotor und ein Lüfterrad, über das Luft wahlweise über einen Umlufteinlaß oder einen Frischlufteinlaß angesaugt und zur Temperierung bzw. Klimatisierung über den Verdampfer (33), den Wärmeübertrager (34) und den Luftaustrittsteil (8) in das Cockpit geleitet werden kann. Dabei sind die Frischluftmenge über eine hinter einem Frischlufteinlaß angeordnete Frischluftklappe (26) und die Umluftmenge über eine hinter einem Umlufteinlaß angeordnete Umluftklappe (29) regulierbar. Die Frischluft (30) wird durch ein Partikelfilter (27) und ein dahinter liegendes Aktivkohlefilter (28) hindurchgeleitet, wobei jedes der beiden Filter (27, 28) in der durch die Demontagepfeile (D1) angedeuteten Richtung schräg nach oben aus dem Lufteintrittsteil (3) herausgenommen werden kann. Vor den Filtern (27, 28) kann eine Feuchtigkeitsfalle vorgesehen sein, um die Feuchtigkeit der von außen einströmenden Frischluft (30) abzuscheiden. Ein das Gehäuse des Lufteintrittsteils (3) umgebender, geneigt verlaufender Ringflansch (37) liegt bei eingebauter Klimaanlage gegen den Rand der in der Stirnwand des Fahrzeuges zur Unterbringung der längs eingebauten Klimaanlage vorgesehenen Stirnwanddurchbruchöffnung an.

Der Luftaustrittsteil (8) ist über eine weitere Trennstelle (7), die eine umlaufende Schaumdichtung (9) beinhaltet, lösbar an dem hinteren Stirnende der strömungsabwärts gelegenen Mittelteil-Moduleinheit (5b) angebracht. Wie für diese Trennstelle (7) in Fig. 2 exemplarisch dargestellt, kann die jeweilige Trennstellenverbindung am einen Trennstellenteil befindliche Paßstifte (38) beinhalten, die mit zugehörigen Zentrieröffnungen (39) am anderen Trennstellenverbindungsteil zusammenwirken. Der Luftaustrittsteil (8) enthält einen nach unten gerichteten Luftauslaß (40) mit zugeordneter Luftklappe (41) zur geregelten Ausströmung temperierter Luft (42) in den Fußraum des Fahrzeugs, zwei an der Oberseite seitlich angeordnete Entfrostungs-Auslaßöffnungen (43a, 43b) mit jeweils zugeordneter Luftklappe (43c), über die eine entfrostende Luftströmung (44) für die Fahrzeugscheiben ausströmbar ist, sowie einen an der Oberseite mittig angeordneten Belüftungs- und Schichtungsauslaß (45) mit zugehöriger Luftklappe (46) zur Erzeugung einer Luftströmung (47) für den oberen Fahrzeuginnenraumbereich.

Die strömungsaufwärts gelegene Mittelteil-Moduleinheit (5a) hält den Verdampfer (33) derart, daß letzterer zu Austauschzwecken nach oben herausgenommen werden kann, wie durch den Demontagepfeil (D2) symbolisiert. Analog hält die strömungsabwärts gelegene Mittelteil-Moduleinheit (5b) den Wärmeübertrager (34) derart, daß letzterer in Fig. 2 nach vorne rechts herausgenommen werden kann, wie durch den Demontagepfeil (D3) angedeutet. Für den Austausch des Verdampfers (33) oder des Wärmeübertrages (34) brauchen daher weder die Klimaanlage insgesamt ausgebaut, noch eine oder mehrere der einzelnen Moduleinheiten (3, 5a, 5b, 8) abgenommen zu werden. Im Mittelteil (5) können außerdem ein Stellventil für den Wärmeübertrager (34), ein Temperaturfühler für den Betrieb des Verdampfers (33) und ein Schadstoffsensor zur Detektierung der Schadstoffanteile der Außenluft vorgesehen sein. Dadurch kann die Umstellung von Frischluft auf Umluft manuell oder selbsttätig dann erfolgen, wenn vom Schadstoffsensor in der Frischluft eine erhöhte Schadstoffkonzentration detektiert wird. In der Umluftstellung zirkuliert die Luft im Cockpit, wobei sie vom Luftansauggebläse (25) über den Umlufteinlaß eingesaugt wird.

Zur Halterung der eingebauten Klimaanlage ist fahrzeugkarosserieseitig eine nicht gezeigte Führung in Form zweier seitlicher, im wesentlichen in Fahrzeuglängsrichtung verlaufender Schienen vorgesehen, die in eine Mehrzahl von dazu korrespondierender Ausnehmungen (48) eingreifen, welche an den Seiten des Klimaanlagengehäuses, insbesondere an dem der Stirnwand zugeordneten Ringflansch (37) und an den zusammenwirkenden Flanschen der Trennstelle (7) zwischen Mittelteil (5) und Luftaustrittsteil (8) eingebracht sind. Zusätzlich können die verschiedenen Moduleinheiten (3, 5a, 5b, 8) an zugehörigen Befestigungspunkten lösbar mit dem Cockpit, der Stirnwand oder einem anderen Fahrzeugkarosseriebereich verbunden sein.

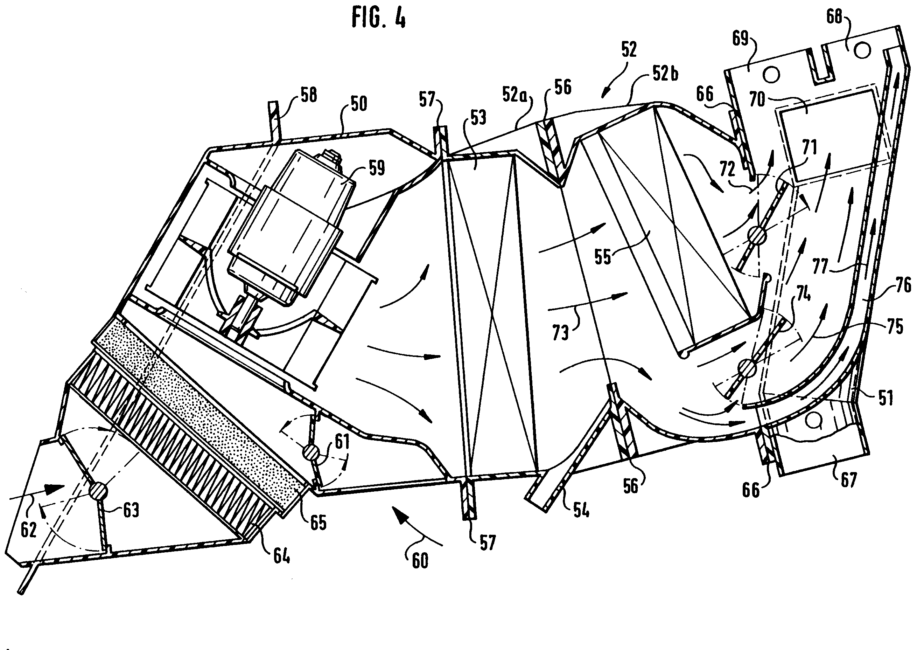

Fig. 4 zeigt eine Klimaanlage, die weitgegend ähnlich wie die Klimaanlage der Fig. 2 und 3 aufgebaut ist, jedoch nach dem Prinzip der luftseitigen Regelung arbeitet, d.h. die Temperatur der dem Fahrzeuginnenraum zugeführten Luft wird durch Steuerung des Verhältnisses eines über ein Heizelement hinweggeführten Luftstromanteils zu einem an dem Heizelement vorbeigeführten Luftstromanteils geregelt. Die Klimaanlage besteht wiederum aus einem Lufteintrittsteil (50), einem Luftaustrittsteil (51) und einem zwischenliegenden Mittelteil (52), der seinerseits aus einer vorderen, einen Verdampfer (53) mit rückseitigem Kondenswasserablauf (54) beinhaltenden Moduleinheit (52a) und einer hinteren, einen als Heizelement fungierenden Wärmeübertrager (55) enthaltenden Moduleinheit (52b) besteht. Die beiden Mittelteil-Moduleinheiten (52a, 52b) sind über eine Trennstelle (56) lösbar aneinander befestigt. An das vordere Stirnende der den Verdampfer (53) enthaltenden Mittelteil-Moduleinheit (52a) ist über eine dortige Trennstelle (57) das Lufteintrittsteil (50) lösbar angebracht. Das Lufteintrittsteil (50) beinhaltet wiederum einen schräg verlaufenden, gehäuseaußenseitigen Ringflansch (58), der sich bei eingebauter Klimaanlage gegen den Rand eines zugehörigen Stirnwanddurchbruchs anlegt, ein Luftansauggebläse (59) zur Ansaugung wahlweise von Umluft (60) über eine Umluftklappe (61) oder von Frischluft (62) über eine Frischluftklappe (63) und Weiterleitung zu dem luftklimatisierenden und lufttemperierenden Mittelteil (52). Zwischen Frischluftklappe (63) und Luftansauggebläse (59) sind wiederum hintereinanderliegend ein Partikelfilter (64) und ein Aktivkohlefilter (65) vorgesehen.

An das hintere Stirnende der das Heizelement (55) enthaltenden Mittelteil-Moduleinheit (52b) ist über eine dortige Trennstelle (66) der Luftaustrittsteil (51) angeschlossen, der einen nach unten gerichteten Fußraumauslaß (67) sowie nach oben gerichtet einen Belüftungsauslaß (68) und einen Entfrostungsauslaß (69) aufweist, wobei jedem Auslaß eine luftströmungsregelnde Klappe zugeordnet ist. Der Fußraumauslaßquerschnitt (70) ist in Fig. 4 mit einer gestrichelten Umrahmung verdeutlicht.

Zur luftseitigen Regelung dieser Klimaanlage ist das Heizelement (55) in der hinteren Mittelteil-Moduleinheit (52b) so angeordnet, daß es lediglich einen oberen Strömungsbereich des Mittelteils (52) einnimmt, der strömungsabwärts von einer zugehörigen Warmluftklappe (71) zum Luftaustrittsteil (51) hin zwecks Regelung der Warmluftströmungsmenge (72) steuerbar geöffnet oder geschlossen werden kann. Der unterhalb des Heizelementes (55) freibleibende Bereich bildet einen Bypass für die aus dem Verdampfer austretende Luft (73), wobei eine zugeordnete Bypassklappe (74) zur Regulierung der entsprechenden, in den Luftaustrittsteil (51) gelangenden Kaltluftströmungsmenge (75) dient. Die Warmluftklappe (71) und die Bypassklappe (74) sind dabei am Gehäuse der hinteren Mittelteil-Moduleinheit (52b) drehbeweglich gelagert. Im Luftaustrittsteil (51) ist ein zusätzlicher Schichtungskanal (76) vorgesehen, dessen Einlaß unterhalb der Bypassklappe (74) liegt, so daß unabhängig von der Stellung der Warmluftklappe (71) und der Bypassklappe (74) stets ein gewisser Anteil der aus dem Verdampfer austretenden Luftströmung (73) in den Schichtungskanal (76) eintritt, dessen Austrittsöffnung in den Belüftungsauslaß (68) mündet, dem der Schichtungsluftstromanteil (77) zugeführt wird.

Die vorstehende Beschreibung bevorzugter erfindungsgemäßer Klimaanlagen veranschaulicht, daß durch die Erfindung sowohl luftseitig als auch wasserseitig regelnde Klimaanlagen mit modularem Aufbau bereitgestellt werden, bei denen von einem Lufteintrittsteil, einem Luftaustrittsteil und einem dazwischenliegenden Mittelteil, der Bauteile mit Lufttemperierungsfunktion beinhaltet, wenigstens einer als Moduleinheit lösbar an wenigstens einem der beiden anderen Teile, die ihrerseits eine gemeinsame oder jeweils wiederum eine oder mehrere eigenständige Moduleinheiten bilden, lösbar befestigt ist. Somit lassen sich in einfacher Weise eine Vielzahl ähnlich aufgebauter Klimaanlagen von im wesentlichen gleicher Bauform durch Verwendung jeweils unterschiedlicher Moduleinheiten realisieren, z.B. Anlagen mit unterschiedlichen Verdampfer- oder Heizelementtypen, insbesondere solchen mit unterschiedlicher Kühl- oder Heizleistung. Die Klimaanlagen können, wie gezeigt, für einen Einbau in Fahrzeuglängsrichtung, alternativ jedoch auch für jedenfalls teilweise querliegenden Einbau ausgelegt sein. Die gezeigte Hintereinanderanordnung der Moduleinheiten der Klimaanlage in Fahrzeuglängsrichtung ist unter dem Gesichtspunkt des benötigten Einbauraums besonders günstig. Der erfindungsgemäße modulare Aufbau der Klimaanlage vereinfacht des weiteren den Austausch einzelner Moduleinheiten oder in diesen enthaltener Komponenten sowie eine recyclinggerechte Zerlegung der Klimaanlage.

## Patentansprüche

1. Heizungs- oder Klimaanlage für ein Kraftfahrzeug, mit
- einem Lufteintrittsteil (3, 11), einem Luftaustrittsteil (8, 13) und einem mindestens ein Lufttemperierfunktionsbauteil enthaltenden Mittelteil (5, 12) zwischen dem Lufteintrittsteil und dem Luftaustrittsteil,
gekennzeichnet durch
- einen modularen Aufbau aus über jeweils eine Trennstelle (4, 6, 7) lösbar miteinander verbundenen Moduleinheiten dergestalt, daß eine der Trennstellen zwischen dem Lufteintrittsteil (3) und dem Mittelteil (5) und/oder zwischen dem Mittelteil und dem Luftaustrittsteil (8) vorgesehen ist und der Mittelteil (5) aus zwei in Luftströmungsrichtung hintereinanderliegenden, über eine zugehörige Trennstelle (6) lösbar miteinander verbundenen Moduleinheiten (5a, 5b) besteht, von denen die strömungsaufwärts gelegene Moduleinheit (5a) einen Verdampfer und die strömungsabwärts gelegene Moduleinheit (5b) ein Heizelement beinhalten.

2. Heizungs- oder Klimaanlage nach Anspruch 1, weiter dadurch gekennzeichnet, daß der Lufteintrittsteil (11), der Mittelteil (12) und der Luftaustrittsteil (13) im wesentlichen längs einer Axiallinie (10) hintereinander angeordnet sind, die bei in das Fahrzeug eingebauter Anlage parallel zur Fahrzeuglängsrichtung (9) liegt.

3. Klimaanlage nach Anspruch 2, weiter dadurch gekennzeichnet, daß der Lufteintrittsteil (3, 11) ein Luftansauggebläse (25) enthält, das mit zur Fahrzeuglängsrichtung (9) schräg verlaufender Lüfterachse angeordnet ist.

4. Klimaanlage nach Anspruch 3, weiter dadurch gekennzeichnet, daß der Lufteintrittsteil (3) über eine zugehörige Trennstelle (4) mit der strömungsaufwärts gelegenen MittelteilModuleinheit (5a) und der Luftaustrittsteil (8) über eine zugehörige Trennstelle (7) mit der strömungsabwärts gelegenen Mittelteil-Moduleinheit (5b) lösbar verbunden sind.

## Claims

1. A heating or air-conditioning system for a motor vehicle with
- an air intake part (3, 11), an air outlet part (8, 13) and a central part (5, 12) containing at least one air moderating function component between the air intake part and the air outlet part.
characterised by
- a modular construction consisting of connected module units each of which can be detached by means of a detachment point (4, 6, 7) in such a way that one of the detachment points is provided between the air intake part (3) and the central part (5) and/or between the central part (5) and the air outlet part (8) and that the central part (5) consists of two connected module units (5a, 5b) positioned one after the other in the direction of the air flow which can be detached by means of a corresponding detachment point (6), with the upstream positioned module unit (5a) containing an evaporator and the downstream positioned module unit (5b) containing a heating element.

2. A heating or air-conditioning system in accordance with Claim 1, further characterised in that the air intake part (11), the central part (12) and the air outlet part (13) are essentially positioned one behind the other along an axial line (10) parallel to the longitudinal direction of the vehicle.

3. An air-conditioning system in accordance with Claim 2, characterised in that the air intake part (3, 11) contains an air suction fan (25) which is positioned with the fan axis running at an angle to the longitudinal direction of the vehicle.

4. An air-conditioning system in accordance with Claim 3, characterised in that the air intake part (3) is connected via a corresponding detachment point (4) to the upstream located central part module unit (5a) and the air outlet part (8) is connected via a corresponding detachment point (7) to the downstream located central part module unit (5b) in such a way as they can be detached.

## Revendications

1. Installation de chauffage ou de climatisation pour un véhicule automobile, comportant
- une partie (3,11) d'entrée de l'air, une partie (8,13) de sortie de l'air et une partie médiane (5,12) contenant au moins un composant fonctionnel de mise en température de l'air et qui est disposée entre la partie d'entrée de l'air et la partie de sortie de l'air,
caractérisée par
- une construction modulaire comprenant des unités formant modules qui sont reliées entre elle de façon amovible par l'intermédiaire de zones de séparation respectives (4,6,7) de telle sorte que l'une des zones de séparation est prévue entre la partie (3) d'entrée de l'aire et la partie médiane (5) et/ou entre la partie médiane et la partie (8) de sortie de l'air et que la partie médiane (5) est constituée par deux unités formant modules (5a, 5b), qui sont disposées l'une derrière l'autre dans la direction de circulation de l'air et sont reliées entre elles de façon amovible par l'intermédiaire d'une zone de séparation associée (6) et parmi lesquelles l'unité formant module (5a) située en amont possède un évaporateur et l'unité formant module (5b) disposée en aval contient un élément chauffant.

2. Installation de chauffage ou de climatisation selon la revendication 1, caractérisée en ce que la partie (11) d'entrée de l'air, la partie médiane (12) et la partie (13) de sortie de l'air sont disposées les unes derrière les autres essentiellement le long d'une ligne axiale (10), qui, à l'état monté dans le véhicule, est parallèle à la direction longitudinale (9) du véhicule.

3. Installation de climatisation selon la revendication 2, caractérisée en ce que la partie (3,11) d'entrée de l'air contient un ventilateur aspirant (25) dur l'air, qui est disposé de telle sorte que son axe est oblique par rapport à la direction longitudinale (9) du véhicule.

4. Installation de climatisation selon la revendication 3, caractérisée en ce que la partie (3) d'entrée' de l'air est reliée de façon amovible par l'intermédiaire d'une zone associée de séparation (4) à l'unité formant module (5a) de la partie médiane, située en amont, et que la partie (8) de sortie de l'air est reliée de façon amovible par l'intermédiaire d'une zone associée de séparation (7) à l'unité formant module (5b) de la partie médiane, située en aval.
